# EUROPEAN PATENT APPLICATION

(11) **EP 4 568 337 A1**
(43) Date of publication of application: **11.06.2025**
(21) Application number: 22953567.9
(22) Date of filing: 03.08.2022
(51) Int. Cl.: H04W 28/02

(54) **MULTI-STREAM SYNCHRONIZATION THRESHOLD PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/110115
(87) International publication number: WO 2024/026757

(57) **Abstract**

Embodiments of the present disclosure provide a multi-stream synchronization threshold processing method and apparatus, a communication device, and a storage medium. The multi-stream synchronization threshold processing method is implemented by a base station, and comprises: determining a synchronization threshold, wherein the synchronization threshold is used for indicating a delay deviation requirement of transmission between at least two data streams of a plurality of data streams.

## Description

### TECHNICAL FIELD

The present disclosure relates to but is not limited to the technical field of wireless communication technology, and in particular, to a multi-flow synchronization threshold processing method and apparatus, a communication device, and a storage medium.

### BACKGROUND

In the related art, in the reference architecture of federated learning, the local calculation result of at least one candidate user equipment (UE) needs to be sent to the server simultaneously or within a specified delay, and missing the local calculation result of one UE will cause the failure of the entire reasoning process.

Therefore, in the scenario where multiple devices work together in groups, one of the important scenarios is that the data collected by the UEs is expected to be sent to the server at the same time or after a certain delay.

However, in the existing 3rd Generation Partnership Project (3GPP) network, the design of Quality of Service (QoS) flow is usually based on a single UE or a single flow, which cannot meet the effective scheduling requirements for the collaboration of multiple data flows.

### SUMMARY

The embodiments of the present disclosure provide a multi-flow synchronization threshold processing method and apparatus, a communication device, and a storage medium.

According to a first aspect of the present disclosure, a multi-flow synchronization threshold processing method is provided, which is executed by a base station and the method includes:
determining a synchronization threshold, where the synchronization threshold is used to indicate a delay deviation requirement for transmission of at least two data flows in a plurality of data flows.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, determining the synchronization threshold includes: receiving first notification information sent by a core network device, where the first notification information carries the synchronization threshold.

In some embodiments, the first notification information carries the synchronization threshold between any two data flows in the plurality of data flows; or the first notification information carries the synchronization threshold uniformly configured for the plurality of data flows; or the first notification information carries the synchronization threshold between any data flow and a reference data flow in the plurality of data flows.

In some embodiments, the reference data flow includes a first type of reference data flow, where the first type of reference data flow is determined based on a protocol agreement.

In some embodiments, the first type of reference data flow includes one of following:
a first data flow in the plurality of data flows; and
a previous data flow of the any data flow in the plurality of data flows.

In some embodiments, the reference data flow includes a second type of reference data flow; and
the method includes: determining the second type of reference data flow based on first indication information sent by the core network device.

In some embodiments, the second type of reference data flow is any data flow in the plurality of data flows.

In some embodiments, the first notification information further includes at least one of following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

In some embodiments, the method includes: sending a delay deviation measurement result to a core network device, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

In some embodiments, the method includes: receiving auxiliary information sent by a user equipment (UE), where the auxiliary information carries the delay deviation measurement result.

In some embodiments, the auxiliary information further includes: an expected synchronization threshold between two data flows expected by the UE.

In some embodiments, the method includes: determining the second delay deviation measurement result to be sent to the core network device based on the first delay deviation measurement result carried in the received auxiliary information;
and/or, determining the second delay deviation measurement result to be sent to the core network device based on the second delay deviation measurement result carried in the received auxiliary information.

In some embodiments, the method includes: sending fourth indication information to a UE, where the fourth indication information is used to indicate at least two data flows for reporting the delay deviation measurement result.

According to a second aspect of the present disclosure, a multi-flow synchronization threshold processing method is provided, which is executed by a core network device and the method includes:
sending first notification information to a base station, where the first notification information carries a synchronization threshold, and the synchronization threshold is used to indicate a delay deviation requirement for transmission of at least two data flows in a plurality of data flows.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the first notification information carries the synchronization threshold between any two data flows in the plurality of data flows; or, the first notification information carries the synchronization threshold uniformly configured for the plurality of data flows; or, the first notification information carries the synchronization threshold between any data flow and a reference data flow in the plurality of data flows.

In some embodiments, the reference data flow includes: a first type of reference data flow, where the first type of reference data flow is determined based on a protocol agreement.

In some embodiments, the first type of reference data flow includes one of following:
a first data flow in the plurality of data flows; and
a previous data flow of the any data flow in the plurality of data flows.

In some embodiments, the reference data flow includes a second type of reference data flow; and
the method includes: sending first indication information to the base station, where the first indication information indicates the second type of reference data flow.

In some embodiments, the second type of reference data flow is any data flow in the plurality of data flows.

In some embodiments, the first notification information further includes at least one of following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

In some embodiments, the method includes: receiving a threshold value measurement result sent by the base station, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

According to a third aspect of the present disclosure, a multi-flow synchronization threshold processing method is provided, which is executed by a UE and the method includes:
sending auxiliary information to a base station, where the auxiliary information includes an expected synchronization threshold, the expected synchronization threshold is used by the base station to determine a synchronization threshold, and the synchronization threshold is used to indicate a delay deviation requirement for transmission of at least two data flows in the plurality of data flows.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the auxiliary information further includes: a delay deviation measurement result, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

In some embodiments, the method includes:
receiving fourth indication information sent by the base station; and
determining the delay deviation measurement result between at least two data flows to be reported as indicated by the fourth indication information.

According to a fourth aspect of the present disclosure, a multi-flow synchronization threshold processing apparatus is provided, which includes:
a first processing module, configured to determine a synchronization threshold, where the synchronization threshold is used to indicate a delay deviation requirement for transmission of at least two data flows in a plurality of data flows.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the apparatus includes: a first receiving module, configured to receive first notification information sent by a core network device, where the first notification information carries the synchronization threshold.

In some embodiments, the first notification information carries the synchronization threshold between any two data flows in the plurality of data flows; or the first notification information carries the synchronization threshold uniformly configured for the plurality of data flows; or the first notification information carries the synchronization threshold between any data flow and a reference data flow in the plurality of data flows.

In some embodiments, the reference data flow includes a first type of reference data flow, where the first type of reference data flow is determined based on a protocol agreement.

In some embodiments, the first type of reference data flow includes one of following:
a first data flow in the plurality of data flows; and
a previous data flow of the any data flow in the plurality of data flows.

In some embodiments, the reference data flow includes a second type of reference data flow; and
the first processing module is configured to determine the second type of reference data flow based on first indication information sent by the core network device.

In some embodiments, the second type of reference data flow is any data flow in the plurality of data flows.

In some embodiments, the first notification information further includes at least one of following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

In some embodiments, the apparatus includes: a first sending module, configured to send a delay deviation measurement result to a core network device, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

In some embodiments, the first receiving module is configured to receive auxiliary information sent by a UE, where the auxiliary information carries the delay deviation measurement result.

In some embodiments, the auxiliary information further includes: an expected synchronization threshold between two data flows expected by the UE.

In some embodiments, the first processing module is configured to determine the second delay deviation measurement result to be sent to the core network device based on the first delay deviation measurement result carried in the received auxiliary information;
and/or,
the first processing module is configured to determine the second delay deviation measurement result to be sent to the core network device based on the second delay deviation measurement result carried in the received auxiliary information.

In some embodiments, the first sending module is configured to send fourth indication information to a UE, where the fourth indication information is used to indicate at least two data flows for reporting the delay deviation measurement result.

According to a fifth aspect of the present disclosure, a multi-flow synchronization threshold processing apparatus is provided, and the apparatus includes:
a second sending module, configured to send first notification information to a base station, where the first notification information carries a synchronization threshold, and the synchronization threshold is used to indicate a delay deviation requirement for transmission of at least two data flows in a plurality of data flows.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the first notification information carries the synchronization threshold between any two data flows in the plurality of data flows; or, the first notification information carries the synchronization threshold uniformly configured for the plurality of data flows; or, the first notification information carries the synchronization threshold between any data flow and a reference data flow in the plurality of data flows.

In some embodiments, the reference data flow includes: a first type of reference data flow, where the first type of reference data flow is determined based on a protocol agreement.

In some embodiments, the first type of reference data flow includes one of following:
a first data flow in the plurality of data flows; and
a previous data flow of the any data flow in the plurality of data flows.

In some embodiments, the reference data flow includes a second type of reference data flow; and
the second sending module is configured to send first indication information to the base station, where the first indication information indicates the second type of reference data flow.

In some embodiments, the second type of reference data flow is any data flow in the plurality of data flows.

The second indication information is used to trigger reporting of a delay deviation measurement result, where the delay deviation measurement result indicates whether a measured delay deviation between data flows meets a requirement of the synchronization threshold or a measured delay deviation between measured data flows.

The third indication information is used to indicate a reporting type for the delay deviation measurement result to be reported, where the reporting type includes: a periodic reporting type or a trigger event reporting type.

In some embodiments, the apparatus includes: a second receiving module configured to receive a threshold value measurement result sent by the base station, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

According to a sixth aspect of the present disclosure, a multi-flow synchronization threshold processing apparatus is provided, and the apparatus includes:
a third sending module, configured to send auxiliary information to a base station, where the auxiliary information includes an expected synchronization threshold, the expected synchronization threshold is used by the base station to determine a synchronization threshold, and the synchronization threshold is used to indicate a delay deviation requirement for transmission of at least two data flows in the plurality of data flows.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the auxiliary information further includes: a delay deviation measurement result, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

In some embodiments, the apparatus includes:
a third receiving module, configured to receive fourth indication information sent by the base station; and
the third processing module is configured to determine the delay deviation measurement result between at least two data flows to be reported as indicated by the fourth indication information.

According to a seventh aspect of the present disclosure, a communication device is provided, and the communication device includes:
a processor; and
a memory for storing executable instructions of the processor;
where the processor is configured to implement the multi-flow synchronization threshold processing method according to any embodiment of the present disclosure when running the executable instructions.

According to an eighth aspect of the present disclosure, a computer storage medium is provided, where the computer storage medium stores a computer executable program, and the executable program implements the multi-flow synchronization threshold processing method according to any embodiment of the present disclosure when being executed by a processor.

The technical solutions provided by the embodiments of the present disclosure may have the following beneficial effects:

In the embodiments of the present disclosure, the base station can determine a synchronization threshold, and the synchronization threshold is used to indicate a delay deviation requirement for transmission of at least two data flows in a plurality of data flows, thereby limiting the delay deviation requirement for the base station to schedule the at least two data flows, so as to meet the requirement for synchronous collaboration of the at least two data flows.

It should be understood that the foregoing general description and the following detailed description are exemplary and explanatory only, and do not limit the embodiments of the present disclosure.

### BRIEF DESCRIPTION OF THE DRAWINGS

FIG. 1 is a schematic structural diagram of a wireless communication system according to an exemplary embodiment.
FIG. 2 is a schematic diagram of a multi-flow synchronization threshold processing method shown according to an exemplary embodiment.
FIG. 3 is a schematic diagram of a multi-flow synchronization threshold processing method shown according to an exemplary embodiment.
FIG. 4 is a schematic diagram of a multi-flow synchronization threshold processing method shown according to an exemplary embodiment.
FIG. 5 is a schematic diagram of a multi-flow synchronization threshold processing method shown according to an exemplary embodiment.
FIG. 6 is a schematic diagram of a multi-flow synchronization threshold processing method shown according to an exemplary embodiment.
FIG. 7 is a schematic diagram of a multi-flow synchronization threshold processing method shown according to an exemplary embodiment.
FIG. 8 is a block diagram of a multi-flow synchronization threshold processing apparatus shown according to an exemplary embodiment.
FIG. 9 is a block diagram of a multi-flow synchronization threshold processing apparatus shown according to an exemplary embodiment.
FIG. 10 is a block diagram of a multi-flow synchronization threshold processing apparatus shown according to an exemplary embodiment.
FIG. 11 is a block diagram of a UE shown according to an exemplary embodiment.
FIG. 12 is a block diagram of a base station shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure, as detailed in the appended claims.

Terms used in the embodiments of the present disclosure are used solely for the purpose of describing certain embodiments and are not intended to limit the embodiments of the present disclosure. The singular forms of "a/an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when..." or "in the case..." or "in response to determination".

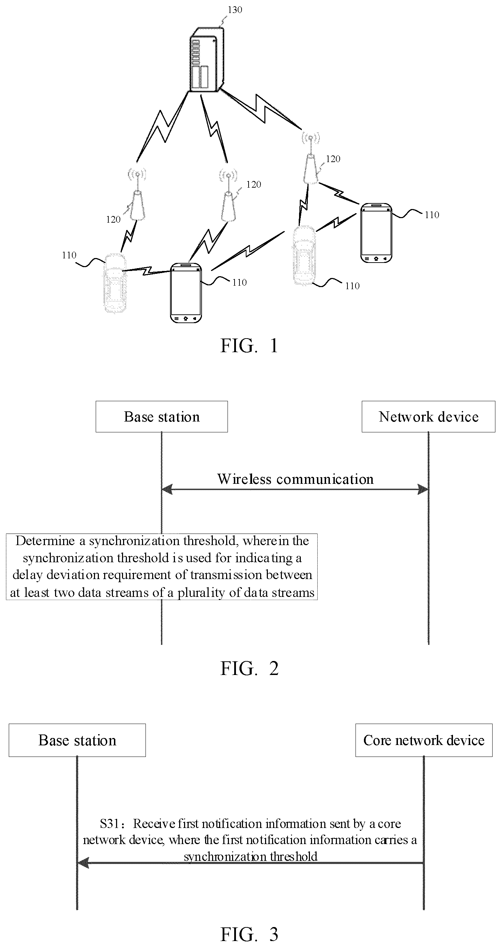

Referring to FIG. 1, it shows a schematic diagram of the structure of a wireless communication system provided by an embodiment of the present disclosure. As shown in FIG. 1, the wireless communication system is a communication system based on cellular mobile communication technology, and the wireless communication system may include: a plurality of user equipments 110 and a plurality of base stations 120.

The user equipment 110 may refer to a device that provides voice and/or data connectivity to a user. The user equipment 110 may communicate with one or more core networks via a radio access network (RAN). The user equipment 110 may be an IoT user equipment, such as a sensor device, a mobile phone (or referred to as a "cellular" phone), and a computer with an IoT user equipment, for example, it may be a fixed, portable, pocket-sized, handheld, computer-built-in, or vehicle-mounted apparatus, e.g., a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may be a device of an unmanned aerial vehicle. Alternatively, the user equipment 110 may be a vehicle-mounted device, for example, it may be a trip computer with a wireless communication function, or a wireless terminal externally connected to a trip computer. Alternatively, the UE may be a roadside device, for example, a street lamp, a signal lamp, or other roadside devices with a wireless communication function.

The base station 120 may be a network side device in the wireless communication system. The wireless communication system may be the 4th generation mobile communication technology (4G) system, also known as a long term evolution (LTE) system; or, the wireless communication system may be a 5G system, also known as a new radio (NR) system or a 5G NR system. Alternatively, the wireless communication system may be a next generation system after the 5G system. The access network in the 5G system may be referred to as a new generation-radio access network (NG-RAN).

The base station 120 may be an evolved base station (eNB) used in a 4G system. Alternatively, the base station 12 may also be a base station (gNB) using a centralized and distributed architecture in a 5G system. When the base station 12 uses the centralized and distributed architecture, it usually includes a central unit (CU) and at least two distributed units (DU). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the base station 120 is not limited by the embodiments of the present disclosure.

A wireless connection may be established between the base station 12 and the user equipment 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard after 5G.

In some embodiments, an end to end (E2E) connection may also be established between the user equipments 110, for example, scenarios like vehicle to vehicle (V2V) communication, vehicle to infrastructure (V2I) communication, and vehicle to pedestrian (V2P) communication in vehicle to everything (V2X) communication.

Here, the above-mentioned user equipment may be considered as the terminal device of the following embodiments.

In some embodiments, the wireless communication system may further include a network management device 130.

Several base stations 120 are respectively connected to the network management device 130. The network management device 130 may be a core network device in the wireless communication system, for example, the network management device 130 may be a mobility management entity (MME) in an evolved packet core (EPC). Alternatively, the network management device may also be other core network devices, such as a serving gateway (SGW), a public data network gateway (PGW), a policy and charging rules function unit (Policy and Charging Rules Function, PCRF), or a home subscriber server (HSS). The embodiments of the present disclosure do not limit the implementation form of the network management device 130.

In order to facilitate the understanding of those skilled in the art, the embodiments of the present disclosure list a plurality of implementation manners to clearly illustrate the technical solutions of the embodiments of the present disclosure. Of course, those skilled in the art may understand that the plurality of embodiments provided by the embodiments of the present disclosure may be performed individually, or in combination with the methods of other embodiments of the embodiments of the present disclosure, or in combination with some other methods in the related art when performed individually or in combination; and the embodiments of the present disclosure are not limited thereto.

In order to better understand the technical solutions described in any embodiment of the present disclosure, the related art is first partially described.

In the related art, a plurality of sources or forms of information are involved in multi-modality. For example, a human has the senses of touch, hearing, sight, and smell. The media of information includes voice, video, text, etc. In order to perceive user input from a plurality of dimensions, there are numerous types and numbers of applications (APPs) and/or apparatuses used for multi-modality information collection, including a plurality of cameras, speakers, sensors, keyboards, fingerprint collectors, etc. These apparatuses for collecting the multi-modality information may be on a same device or used across devices. The server side needs to perform data fusion of multi-modality data sets, also known as information fusion, that is, the incomplete information regarding a certain environmental feature provided by multiple sensors or information sources is integrated and processed by data analysis to form a relatively complete and consistent perception description, thereby achieving more accurate recognition and judgment functions. After the server completes data fusion and makes a decision, a multi-modality output is obtained. This process is a distribution process of services. Generally, services are not commonly distributed to a single device, but are likely to be linked to several related devices. For example, a determination that the owner has returned through voiceprints and videos may simultaneously trigger the curtains to be closed and the air conditioner to be turned on. This also involves the problem of the need for group collaboration between multiple output devices.

As shown in FIG. 2, an embodiment of the present disclosure provides a multi-flow synchronization threshold processing method, which is executed by a base station and includes the following.

In step S21, a synchronization threshold is determined, where the synchronization threshold is used to indicate a delay deviation requirement for transmission of at least two data flows in a plurality of data flows.

In an embodiment, the base station may be any type of base station, for example, the base station may be but is not limited to at least one of the following: a 3G base station, a 4G base station, a 5G base station, and other evolved base stations.

In an embodiment, the data flow may be any type of QoS flow. Of course, in other embodiments, the data flow may also be other data flows.

In an embodiment, the data flows may be any input or data collection form. For example, one is a video capture, one is an audio capture, or it may be a tactile capture.

In an embodiment, the synchronization threshold is used to indicate the delay deviation requirement of at least two data flows in the plurality of data flows. In the embodiments of the present disclosure, the plurality refers to two or more.

The following are some definitions of the synchronization threshold.

The synchronization threshold may be defined as a maximum tolerable temporal separation of the onset of two stimuli, one of which is presented to one sense and the other to another sense, such that the accompanying sensory objects are perceived as being synchronous.

That is, it is: synchronization threshold: A synchronization threshold can be defined as the maximum tolerable temporal separation of the onset of two stimuli, one of which is presented to one sense and the other to another sense, such that the accompanying sensory objects are perceived as being synchronous.

The two data flows herein may be any two data flows or two specified data flows in the plurality of data flows that need to be scheduled by the base station; or the two data flows may be any two data flows or two specified data flows that need to cooperate.

The delay deviation requirement herein may be a requirement for being less than or equal to the delay deviation. The synchronization threshold is a requirement, and the synchronization threshold is the requirement that satisfies being less than or equal to the delay deviation. The delay deviation of the two data flows may be the difference in start times when the UE sends the two data flows to the base station, or the difference in start times when the base station receives the two data flows, etc.

In an embodiment, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

The following is an example of a synchronization threshold for video data and tactile data in immersive VR.

A latency difference between the two flows should be less than some values, e.g., for immersive multi-modality VR applications, the synchronization threshold for visual-tactile is less than 15ms (if the visual data is delayed compared to the tactile data) or less than 50ms (if the tactile data is delayed compared to the visual data).

That is: The delay difference between two flows should be less than some values e.g. for immersive multi-modality VR applications, the synchronization threshold for visual-tactile is less than 15ms (if the visual data is delayed compared to the tactile) or less than 50ms (if the tactile is delayed compared to the visual).

In an embodiment, the first delay deviation requirement is the same as the second delay deviation requirement. In another embodiment, the first delay deviation requirement is different from the second delay deviation requirement.

Exemplarily, the two data flows are flow A and flow B, and the synchronization threshold may mean that the transmission time of the flow A is X milliseconds later than that of the flow B, or the transmission time of the flow B is Y milliseconds later than that of the flow A, where both X and Y are positive numbers.

Thus, in the embodiments of the present disclosure, the synchronization threshold may realize bidirectional indication, which may indicate that the delay deviation of the first data flow being later than the second data flow, and may also indicate the delay deviation of the second data flow being later than the first data flow.

In an embodiment, the two data flows in step S21 may come from a same UE, so that the delay requirements of the two data flows of a single UE may be considered.

In another embodiment, the two data flows in step S21 may be from different UEs, so that the consideration of delay requirements of the two data flows of a plurality of UEs may be realized.

In the embodiments of the present disclosure, the base station may determine the synchronization threshold, which is used to indicate the delay deviation requirement for transmission of at least two data flows in a plurality of data flows, thereby limiting the delay deviation requirement of the base station in scheduling the at least two data flows, so as to meet the requirement of synchronous cooperation of the at least two data flows. For example, if the base station schedules one data stream and schedules another data stream at the same time or within the delay deviation requirement, the requirement for synchronous collaboration of the at least two data streams can be met; if the base station schedules one data stream and schedules another data stream after the delay deviation requirement, the requirement for synchronous collaboration of at least two data streams is not met.

It should be noted that those skilled in the art can understand that the method provided in the embodiment of the present disclosure may be performed individually or together with some methods in the embodiments of the present disclosure or some methods in the related art.

In some embodiments, determining the synchronization threshold in step S21 includes: receiving first notification information sent by a core network device, where the first notification information carries the synchronization threshold.

As shown in FIG. 3, an embodiment of the present disclosure provides a multi-flow synchronization threshold processing method, which is executed by a base station and includes the following.

In step S31, first notification information sent by a core network device is received, where the first notification information carries a synchronization threshold.

The core network device herein may be, but is not limited to: various function or logical nodes in network, or an entity that implements a network function, etc. For example, the core network device may be, but is not limited to, an access and mobility management function (AMF) or a unified data management (UDM).

In some embodiments of the present disclosure, the synchronization threshold may be the synchronization threshold in step S21.

In some embodiments, the first notification information carries the synchronization threshold between any two data flows in the plurality of data flows; or, the first notification information carries the synchronization threshold uniformly configured for the plurality of data flows; or, the first notification information carries the synchronization threshold between any data flow and a reference data flow in the plurality of data flows.

In some embodiments of the present disclosure, the plurality of data flows may be the plurality of data flows in step S21. Exemplarily, the plurality of data flows may be a plurality of data flows that need to be scheduled by the base station, or the plurality of data flows may be a plurality of data flows in a data flow list in a protocol agreement. The data flow list herein may be a quality of service flow list (QoS flow list).

In an embodiment, the reference data flow includes a first type of reference data flow, where the first type of reference data flow is determined based on a protocol agreement.

In some embodiments, the first type of reference data flow includes one of the following:
a first data flow in the plurality of data flows; and
a previous data flow of the any data flow in the plurality of data flows.

The protocol herein may be any communication protocol, or the protocol may be a protocol negotiated between the base station and the UE.

The reference data flow herein may be a reference QoS flow.

Here, the protocol agreement may agree that the first data flow in the plurality of data flows is the reference data flow; for example, it may be agreed that the first QoS flow in the QoS flow list is a first reference data flow (e.g., reference QoS flow).

Here, the protocol agreement may stipulate that a previous data flow in the plurality of data flows is the reference data flow; for example, it may be agreed that one QoS flow in the QoS flow list is the reference QoS flow of the second QoS flow.

In yet another embodiment, the reference data flow includes a second type of reference data flow;

The method includes: determining the second type of reference data flow based on first indication information sent by the core network device.

In some embodiments, the second type of reference data flow is any data flow in the plurality of data flows.

An embodiment of the present disclosure provides a multi-flow synchronization threshold processing method, which is executed by a base station and includes: determining a second type of reference data flow based on first indication information sent by a core network device.

The first indication information herein is used to indicate any one or a specified data flow of the plurality data flows. Exemplarily, the first indication information indicates a third QoS flow in the QoS flow list, and the third QoS flow is the second type of reference data flow (reference QoS flow).

Exemplarily, the synchronization threshold indicates the delay deviation requirement between any two QoS flows in the QoS flow list. For example, the synchronization threshold may indicate the delay deviation requirement between the first QoS flow and the second QoS flow in the QoS flow list, or may indicate the delay deviation requirement between the third QoS flow and the sixth QoS flow, etc.

Exemplarily, the synchronization threshold is a synchronization threshold uniformly configured for the QoS flow list, and the synchronization threshold of any two QoS flows in the QoS flow list is the configured synchronization threshold. For example, the synchronization threshold between the first QoS flow and the second QoS flow in the QoS flow list, and the synchronization threshold between the third QoS flow and the sixth QoS flow are the same, and are both the uniformly configured synchronization threshold.

Exemplarily, the synchronization threshold indicates a delay deviation requirement between any QoS flow in the QoS flow list and a reference QoS flow.

For example, if it is determined that the first QoS flow in the QoS flow list is the reference QoS flow based on protocol agreement, then the synchronization threshold may indicate the delay deviation requirement between the second QoS flow and the first QoS flow, or may indicate the synchronization threshold between the fourth QoS flow and the first QoS flow, etc.

For another example, if the second QoS flow before the third QoS flow in the QoS flow list is determined as the reference QoS flow based on protocol agreement, then the synchronization threshold may indicate the delay deviation requirement between the second QoS flow and the third QoS flow.

For yet another example, if the third QoS flow in the QoS flow list is determined as the reference QoS flow based on the first notification information sent by the core network device, then the synchronization threshold may indicate the delay deviation requirement between the second QoS flow and the third QoS flow, or may indicate the synchronization threshold between the fourth QoS flow and the third QoS flow, etc.

Thus, in the embodiments of the present disclosure, it can be determined in a variety of ways which two data flows in the plurality of data flows the synchronization threshold is for, which can be adapted to the determination of the synchronization threshold for at least two data flows in more scenarios.

Furthermore, the reference data flow (the first reference data flow or the second reference data flow) can be determined in a variety of ways, thereby achieving the determination of a variety of reference data flows, which is beneficial for determining the synchronization threshold between two data flows in more application scenarios.

In some embodiments, the first notification information includes one of the following:
QoS establishment request information;
QoS modification request information; and
QoS deletion request information.

Here, the QoS establishment request information may be PDU session resource setup request information. The QoS modification request information may be PDU session resource modification request information. The QoS deletion request information may be PDU session resource deletion request information.

In other embodiments, the first notification information may also include any other feasible information, such as initial context setup request information, etc.

In an embodiment, the first notification information includes the synchronization threshold, and the first notification information further carries the first indication information. In this way, the distribution of the synchronization threshold can be achieved, and it can also be specifically indicated which data flow in the plurality of data flows is used as the reference data flow.

In the embodiments of the present disclosure, the core network device can inform the base station of the determined synchronization threshold through the first notification information, thereby realizing the determination of the synchronization threshold. In addition, the utilization rate of the first notification information is improved, and the first notification information also has the function of its own notification information, e.g. the QoS establishment request information can also realize the establishment of QoS, so that one first notification message can realize two functions, which can also reduce the signaling overhead.

It should be noted that those skilled in the art can understand that the method provided in the embodiment of the present disclosure may be performed individually or together with some methods in the embodiments of the present disclosure or some methods in the related art.

In some embodiments, the first notification information further includes at least one of the following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

In some embodiments of the present disclosure, the first notification information may be the first notification information in the above embodiment. Exemplarily, the first notification information may include the synchronization threshold and/or the first indication information.

Here, the second indication information is used to trigger the base station to report the delay deviation measurement result to the core network device.

Here, the third indication information is used to trigger the base station to periodically report the delay deviation measurement results to the core network device, or to trigger the base station to report the delay deviation measurement results to the core network device based on trigger events.

Here, the delay deviation measurement result includes but is not limited to at least one of the following:
a first delay deviation measurement result: a measured delay deviation between at least two data flows; and
a second delay deviation measurement result: a result of whether the measured delay deviation between the at least two data flows meets the synchronization threshold.

Here, the second delay deviation measurement result includes: a result that the measured delay deviation between the two data flows meets the synchronization threshold, or a result that the measured delay deviation between the two data flows does not meet the synchronization threshold.

Here, the measured delay deviation between the two data flows meeting the synchronization threshold means that the measured delay deviation between the two data flows is less than or equal to the synchronization threshold. The measured delay deviation between the two data flows not meeting the synchronization threshold means that the measured delay deviation between the two data flows is greater than the synchronization threshold.

Here, the measured delay deviation between two data flows refers to a measured delay deviation requirement between the two data flows. For example, the start time for the UE to send the first data flow is the first time, and the start time of sending the second data flow is the second time, then the measured delay deviation is the difference between the first time and the second time. For another example, the start time for the base station to receive the first data flow is the third time, and the start time of receiving the second data flow is the fourth time, then the measured delay deviation is the difference between the third time and the fourth time.

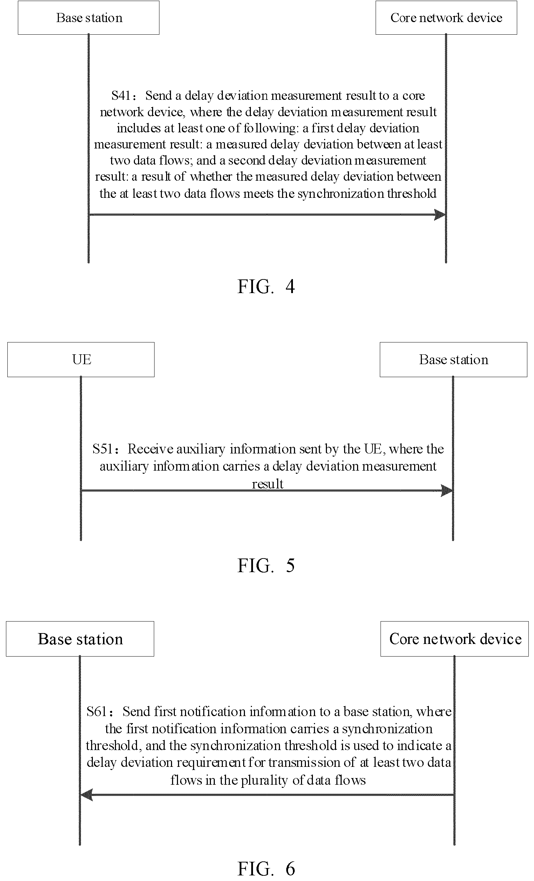

As shown in FIG. 4, an embodiment of the present disclosure provides a multi-flow synchronization threshold processing method, which is executed by a base station and includes the following.

In step S41, a delay deviation measurement result is sent to a core network device, where the delay deviation measurement result includes at least one of following: a first delay deviation measurement result: a measured delay deviation between at least two data flows; and a second delay deviation measurement result: a result of whether the measured delay deviation between the at least two data flows meets the synchronization threshold.

Here, sending the delay deviation measurement result to the core network may be: sending the delay deviation measurement result to the core network device based on a received first notification information.

In some embodiments, sending the delay deviation measurement result to the core network device in step S41 includes: sending second notification information to the core network device, where the second notification information includes the delay deviation measurement result.

An embodiment of the present disclosure provides a multi-flow synchronization threshold processing method, which is executed by a base station and includes: sending second notification information to a core network device, where the second notification information includes a delay deviation measurement result.

In an embodiment, the second notification information includes: PDU session resource notification information.

In this way, in the embodiments of the present disclosure, the base station may send the delay deviation measurement result to the core network device, so that the core network device can monitor whether the actual measured delay deviation of at least two data flows in the plurality of data flows meets the configured synchronization threshold, thereby facilitating the decision of a better scheduling strategy.

Moreover, the delay deviation measurement result may be reported through a second notification message, and the second notification message may not only realize its own functions, such as the PDU session resource notification function, but also realize the reporting of the delay deviation measurement result. In this way, two functions can be realized through one second notification message, thereby improving the utilization rate of the second notification information as well as saving the signaling overhead, etc.

It should be noted that those skilled in the art can understand that the method provided in the embodiment of the present disclosure may be performed individually or together with some methods in the embodiments of the present disclosure or some methods in the related art.

As shown in FIG. 5, an embodiment of the present disclosure provides a multi-flow synchronization threshold processing method, which is executed by a base station and includes the following.

In step S51, auxiliary information sent by the UE is received, where the auxiliary information carries a delay deviation measurement result.

In the embodiments of the present disclosure, the delay deviation measurement result may be the delay deviation measurement result in step S41. Exemplarily, the delay deviation measurement result includes but is not limited to at least one of the following:
a first delay deviation measurement result: a measured delay deviation between at least two data flows; and
a second delay deviation measurement result: a result of whether the measured delay deviation between the at least two data flows meets the synchronization threshold.

In an embodiment, before the step S41, the step S51 is included.

In an embodiment, the auxiliary information may be user assistance information (UAI).

In this way, in the embodiments of the present disclosure, the base station may receive the delay deviation measurement result between at least two data flows in the plurality of data flows sent by the UE, so as to know the measured delay deviation of the at least two data flows, and/or whether the measured delay deviation of the at least two data flows meets the corresponding synchronization threshold, which also facilitates the base station in reporting the measurement threshold result to the core network.

In addition, the UE reports the measurement threshold result to the base station through the auxiliary information, which can also improve the utilization rate of the auxiliary information and save signaling overhead.

An embodiment of the present disclosure provides a multi-flow synchronization threshold processing method, which is executed by a base station and includes:
determining a second delay deviation measurement result to be sent to a core network device based on a first delay deviation measurement result carried in received auxiliary information;
and/or, determining the second delay deviation measurement result to be sent to the core network device based on the second delay deviation measurement result carried in the received auxiliary information.

Exemplarily, if the base station receives a delay deviation measurement result reported by the UE, it can determine the second delay deviation measurement result based on the first delay deviation measurement result in the delay deviation measurement result, and report the second delay deviation measurement result to the core network device.

Exemplarily, if the base station receives the delay deviation measurement result reported by the UE, it can directly report the second delay deviation measurement result in the delay deviation measurement result to the core network device.

In this way, in the embodiments of the present disclosure, the base station can determine the result of whether the measured delay deviation between two data flows satisfies the synchronization threshold in a variety of ways, and send the result to the core network device. Thus, it can adapt to more application scenarios.

In some embodiments, the auxiliary information further includes: an expected synchronization threshold between two data flows expected by the UE.

In step S21, determining the synchronization threshold includes: determining the synchronization threshold based on the expected synchronization threshold.

An embodiment of the present disclosure provides a multi-flow synchronization threshold processing method, which is executed by a base station and includes: determining a synchronization threshold based on an expected synchronization threshold.

Here, the UE may report the expected synchronization threshold, so that the base station may determine the synchronization threshold based on the expected synchronization threshold, which can make the synchronization threshold between the two data flows configured by the base station be more adapted to the requirements of the UE.

An embodiment of the present disclosure provides a multi-flow synchronization threshold processing method, which is executed by a base station and includes: sending fourth indication information to a UE, where the fourth indication information is used to indicate at least two data flows for reporting a delay deviation measurement result.

In an embodiment, the two data flows for reporting the delay variation measurement result indicated by the fourth indication information are any two data flows or two specified data flows in the plurality of data flows.

In yet another embodiment, the two data flows for reporting the delay variation measurement result indicated by the fourth indication information are any data flow and a reference data flow in the in the plurality of data flows.

Exemplarily, the fourth indication information indicates any two QoS flows in the QoS flow list for reporting the delay deviation measurement result, then the UE may report the delay deviation measurement results of the any two QoS flows in the QoS flow list.

Exemplarily, the fourth indication information indicates the delay deviation measurement result between the first QoS flow and the third QoS flow in the QoS flow list, then the UE may report the delay deviation measurement result between the first and third QoS flows.

Exemplarily, the fourth indication information indicates the delay deviation measurement result between the first QoS flow and the reference QoS flow in the QoS flow list, and the reference QoS flow is indicated as the second QoS flow in the QoS flow list by the first indication information, then the UE may report the delay deviation measurement result between the first and second QoS flows.

In an embodiment, at least two data flows for reporting the delay variation measurement result indicated by the fourth indication information may be at least two target data flows.

In this way, the embodiments of the present disclosure may indicate, by means of the fourth indication information, the delay deviation measurement result between at least two data flows that need to be reported, thereby better realizing the transmission scheduling of the at least two data flows.

An embodiment of the present disclosure provides a multi-flow synchronization threshold processing method, which is executed by a base station and includes: determining a configuration of scheduling information based on a synchronization threshold.

In some embodiments, determining the configuration of the scheduling information based on the synchronization threshold includes:
determining starting positions of durations of a plurality of DRX cycles based on the synchronization threshold, where one DRX cycle corresponds to one data flow.

An embodiment of the present disclosure provides a multi-flow synchronization threshold processing method, which is executed by a base station and includes: determining starting positions of durations of a plurality of discontinuous reception (DRX) cycles based on a synchronization threshold, where one DRX cycle corresponds to one data flow.

Exemplarily, one DRX cycle corresponds to one data flow. By setting the starting positions of the durations of the DRX cycle corresponding to at least two data flows, the measured delay deviation of the at least two data flows meets the synchronization threshold. For example, the first data flow is sent in the first DRX cycle, and the second data flow is sent in the second DRX cycle, if the synchronization threshold is X milliseconds, it may mean that a time difference between the starting position of the duration of the first DRX cycle and the starting position of the duration of the second DRX cycle is less than or equal to X milliseconds. In this way, the measured delay between the first data flow and the second data flow can be improved to meet the synchronization threshold.

In this way, in the embodiments of the present disclosure, the base station may realize the configuration of the scheduling information, such as the starting positions of the durations of the plurality of DRX cycles, so that it can realize better scheduling of the plurality of data flows, such as facilitating scheduling of synchronous collaboration of the plurality of data flows.

Of course, in other embodiments, other scheduling information may also be set through the synchronization threshold, for example, a configuration of the starting position of a semi-persistent scheduling (SPS) period, etc.

It should be noted that those skilled in the art can understand that the method provided in the embodiment of the present disclosure may be performed individually or together with some methods in the embodiments of the present disclosure or some methods in the related art.

The following multi-flow synchronization threshold processing method is executed by a core network device, which is similar to the description of the multi-flow synchronization threshold processing method executed by the base station as mentioned above; and for technical details not disclosed in the embodiment of the multi-flow synchronization threshold processing method executed by the core network device, reference may be made to the description of the example of the multi-flow synchronization threshold processing method executed by the base station, which is not described and illustrated in detail herein.

As shown in FIG. 6, an embodiment of the present disclosure provides a multi-flow synchronization threshold processing method, which is executed by a core network device and includes the following.

In step S61, first notification information is sent to a base station, where the first notification information carries a synchronization threshold, and the synchronization threshold is used to indicate a delay deviation requirement for transmission of at least two data flows in the plurality of data flows.

In the embodiment of the present disclosure, the first notification information, the synchronization threshold, and the data flow may be the first notification information, the synchronization threshold, and the data flow in the above embodiments, respectively.

Here, the two data flows may be any two data flows or two specified data flows in the plurality of data flows that need to be scheduled by the base station; or the two data flows may be any two data flows or two specified data flows that need to be coordinated.

Here, the delay deviation requirement for the transmission of two data flows may be: a difference between the start times when the UE sends the two data flows to the base station, or the difference between the start times when the base station receives the two data flows, etc.

The delay deviation requirement herein may also refer to a delay deviation.

Exemplarily, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

Exemplarily, the first notification information carries the synchronization threshold between any two data flows in the plurality of data flows; or, the first notification information carries the synchronization threshold uniformly configured for the plurality of data flows; or, the first notification information carries the synchronization threshold between any data flow and a reference data flow in the plurality of data flows.

Exemplarily, the reference data flow includes a first type of reference data flow, where the first type of reference data flow is determined based on a protocol agreement.

Exemplarily, the first type of reference data flow includes one of the following:
a first data flow in the plurality of data flows; and
a previous data flow of the any data flow in the plurality of data flows.

In some embodiments, the reference data flow includes a second type of reference data flow; and
the method includes: sending first indication information to a base station, where the first indication information indicates the second type of reference data flow.

An embodiment of the present disclosure provides a multi-flow synchronization threshold processing method, which is executed by a core network device and includes: sending first indication information to a base station, where the first indication information indicates a second type of reference data flow.

Exemplarily, the second type of reference data flow is any data flow in the plurality of data flows.

Exemplarily, the first notification information includes one of the following:
QoS establishment request information;
QoS modification request information; and
QoS deletion request information.

Here, the QoS establishment request information may be PDU session resource setup request information. The QoS modification request information may be PDU session resource modification request information. The QoS deletion request information may be PDU session resource deletion request information.

Exemplarily, the first notification information further includes at least one of the following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

An embodiment of the present disclosure provides a multi-flow synchronization threshold processing method, which is executed by a core network device and includes: receiving a threshold value measurement result sent by a base station, where the delay deviation measurement result includes at least one of the following:
a first delay deviation measurement result: a measured delay deviation between at least two data flows; and
a second delay deviation measurement result: a result of whether the measured delay deviation between the at least two data flows meets the synchronization threshold.

Here, the second delay deviation measurement result includes: a result that the measured delay deviation between the two data flows meets the synchronization threshold, or a result that the measured delay deviation between the two data flows does not meet the synchronization threshold.

Here, the measured delay deviation between the two data flows meeting the synchronization threshold means that the measured delay deviation between the two data flows is less than or equal to the synchronization threshold. The measured delay deviation between the two data flows not meeting the synchronization threshold means that the measured delay deviation between the two data flows is greater than the synchronization threshold.

In some embodiments, receiving the threshold value measurement result sent by the base station includes: receiving second notification information sent by the base station, where the second notification information includes the threshold value measurement result.

An embodiment of the present disclosure provides a multi-flow synchronization threshold processing method, which is executed by a core network device and includes: receiving second notification information sent by a base station, where the second notification information includes a threshold value measurement result.

In an embodiment, the second notification information includes: PDU session resource notification information.

For the above implementation manner, reference may be made to the description on the base station side, which will not be described in detail herein.

It should be noted that those skilled in the art can understand that the method provided in the embodiment of the present disclosure may be performed individually or together with some methods in the embodiments of the present disclosure or some methods in the related art.

The following multi-flow synchronization threshold processing method is executed by a UE, which is similar to the description of the multi-flow synchronization threshold processing method executed by the base station and/or the core network device as mentioned above; and for technical details not disclosed in the embodiment of the multi-flow synchronization threshold processing method executed by the UE, reference may be made to the description of the example of the multi-flow synchronization threshold processing method executed by the base station and/or the core network device, which is not described and illustrated in detail herein.

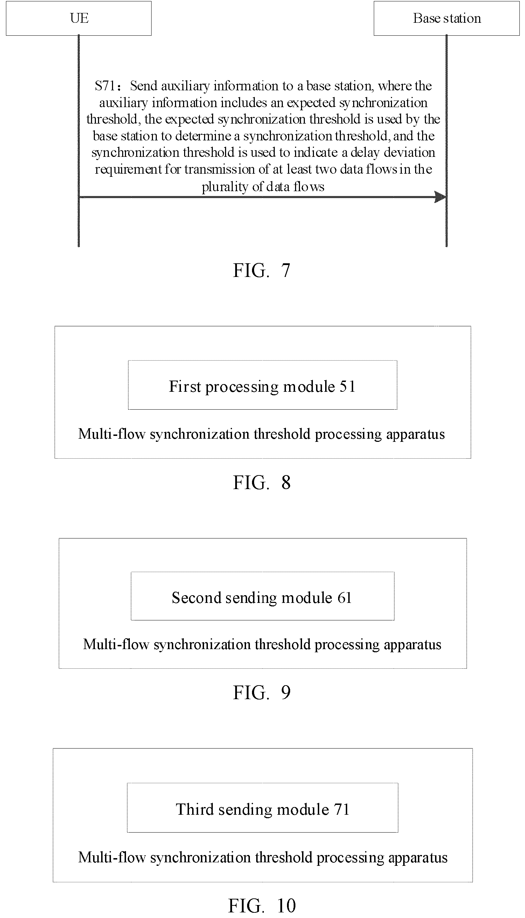

As shown in FIG. 7, an embodiment of the present disclosure provides a multi-flow synchronization threshold processing method, which is executed by a UE and includes the following.

In step S71, auxiliary information is sent to a base station, where the auxiliary information includes an expected synchronization threshold, the expected synchronization threshold is used by the base station to determine a synchronization threshold, and the synchronization threshold is used to indicate a delay deviation requirement for transmission of at least two data flows in the plurality of data flows.

In the embodiment of the present disclosure, the second notification information, the synchronization threshold, and the data flow may be the second notification information, the synchronization threshold, and the data flow in the above embodiments, respectively.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

Exemplarily, the synchronization threshold may be a synchronization threshold between any two data flows in the plurality of data flows; or, the synchronization threshold may be a synchronization threshold uniformly configured for the plurality of data flows; or, the synchronization threshold may be a synchronization threshold between any one data flow and a reference data flow in the plurality of data flows.

Exemplarily, the reference data flow includes: a first type of reference data flow, where the first type of reference data flow is determined based on a protocol agreement.

Exemplarily, the first type of reference data flow includes one of the following:
a first data flow in the plurality of data flows; and
a previous data flow of the any data flow in the plurality of data flows.

Exemplarily, the reference data flow includes a second type of reference data flow, where the second type of reference data flow is any data flow in the plurality of data flows indicated by the first indication information.

Exemplarily, the auxiliary information further includes: a delay deviation measurement result, where the delay deviation measurement result includes at least one of the following:
a first delay deviation measurement result: a measured delay deviation between at least two data flows; and
a second delay deviation measurement result: a result of whether the measured delay deviation between the at least two data flows meets the synchronization threshold.

Exemplarily, the auxiliary information may be user auxiliary information UAI.

An embodiment of the present disclosure provides a multi-flow synchronization threshold processing method, which is executed by a UE and includes:
receiving fourth indication information sent by a base station; and
determining a delay deviation measurement result between at least two data flows to be reported as indicated by the fourth indication information.

For the above implementation manner, reference may be specifically made to the description on the base station and/or core network device side, which will not be repeated herein.

It should be noted that those skilled in the art can understand that the method provided in the embodiment of the present disclosure may be performed individually or together with some methods in the embodiments of the present disclosure or some methods in the related art.

In order to further explain any embodiment of the present disclosure, a specific embodiment is provided as follows.

The embodiment of the present disclosure provides a multi-flow synchronization threshold processing method, which is performed by a communication device, and the communication device includes a UE, a core network device, and a base station. The multi-flow synchronization threshold processing method includes the following steps.

In step S81, the base station determines a synchronization threshold, where the synchronization threshold is used to indicate a delay deviation requirement for transmission of at least two data flows in the plurality of data flows.

In an optional embodiment, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

The step S81 includes a step S81A and/or S81B.

In step S81A, the base station receives first notification information sent by the core network device, where the first notification information carries the synchronization threshold.

In an optional embodiment, the synchronization threshold is used to indicate a synchronization threshold between any two data flows in the plurality of data flows.

In an optional embodiment, the synchronization threshold is used to indicate a synchronization threshold uniformly configured for the plurality of data flows.

In an optional embodiment, the synchronization threshold is used to indicate the synchronization threshold between any data flow and a reference data flow in the plurality of data flows. For example, the protocol agrees that the first QoS flow in the QoS flow list is the reference QoS flow, then the synchronization threshold may indicate the delay deviation requirement between the second QoS flow and the first QoS flow, or may indicate the synchronization threshold between the fourth QoS flow and the first QoS flow, etc. For another example, the protocol predetermines that the second QoS flow before the third QoS flow in the QoS flow list is the reference QoS flow, then the synchronization threshold may indicate the delay deviation requirement between the second QoS flow and the third QoS flow. For another example, if the first notification information sent by the core network device indicates that the third QoS flow in the QoS flow list is the reference QoS flow, then the synchronization threshold may indicate the delay deviation requirement between the second QoS flow and the third QoS flow, or may indicate the synchronization threshold between the fourth QoS flow and the third QoS flow, etc.

Here, the first notification information may be, but is not limited to, one of the following:
PDU session resource setup request information;
PDU session resource modification request information; and
PDU session resource deletion request information.

In step S81B, the core network device sends first notification information, where the first notification information includes:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

Here, the measured delay deviation between the two data flows meeting the synchronization threshold means that the measured delay deviation between the two data flows is less than or equal to the synchronization threshold. The measured delay deviation between the two data flows not meeting the synchronization threshold means that the measured delay deviation between the two data flows is greater than the synchronization threshold.

In step S82, the base station determines a configuration of scheduling information based on the synchronization threshold.

In an optional embodiment, the base station determines starting positions of durations of a plurality of DRX cycles based on the synchronization threshold, where one DRX cycle corresponds to one data flow.

In step S83, the base station receives auxiliary information reported by the UE, where the auxiliary information includes the delay deviation measurement result.

In an optional embodiment, the delay deviation measurement result includes but is not limited to at least one of the following:
a first delay deviation measurement result: a measured delay deviation between at least two data flows; and
a second delay deviation measurement result: a result of whether the measured delay deviation between the at least two data flows meets the synchronization threshold.

In an optional embodiment, the base station sends fourth indication information to the UE, where the fourth indication information is used to indicate at least two data flows for reporting the delay deviation measurement result.

In an optional embodiment, the fourth indication information indicates any two QoS flows in the QoS flow list for reporting the delay deviation measurement result, then the UE may report the delay deviation measurement result between any two QoS flows in the QoS flow list.

In an optional embodiment, the fourth indication information indicates the delay deviation measurement result between the first QoS flow and the third QoS flow in the QoS flow list, then the UE may report the delay deviation measurement result between the first and third QoS flows.

In an optional embodiment, the fourth indication information indicates the delay deviation measurement result between the first QoS flow and the reference QoS flow in the QoS flow list, and the reference QoS flow is indicated as the second QoS flow in the QoS flow list by the first indication information, then the UE may report the delay deviation measurement result between the first and second QoS flows.

In an optional embodiment, the auxiliary information includes an expected synchronization threshold. Here, in step S81, the base station may determine the synchronization threshold based on the expected synchronization threshold. Alternatively, the base station may adjust the synchronization threshold in step S81 based on the expected synchronization threshold.

In step S84, the base station sends the delay deviation measurement result to the core network device, where the delay deviation measurement result includes at least one of the following:
a first delay deviation measurement result: a measured delay deviation between at least two data flows; and
a second delay deviation measurement result: a result of whether the measured delay deviation between the at least two data flows meets the synchronization threshold.

It should be noted that those skilled in the art can understand that the method provided in the embodiment of the present disclosure may be performed individually or together with some methods in the embodiments of the present disclosure or some methods in the related art.

As shown in FIG. 8, an embodiment of the present disclosure provides a multi-flow synchronization threshold processing apparatus, and the apparatus includes:
a first processing module 51, configured to determine a synchronization threshold, where the synchronization threshold is used to indicate a delay deviation requirement for transmission of at least two data flows in a plurality of data flows.

The multi-flow synchronization threshold processing apparatus provided by the embodiment of the present disclosure includes a base station.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

An embodiment of the present disclosure provides a multi-flow synchronization threshold processing apparatus, including: a first receiving module, configured to receive first notification information sent by a core network device, where the first notification information carries the synchronization threshold.

In some embodiments, the first notification information carries the synchronization threshold between any two data flows in the plurality of data flows; or the first notification information carries the synchronization threshold uniformly configured for the plurality of data flows; or the first notification information carries the synchronization threshold between any data flow in the plurality of data flows and a reference data flow.

In some embodiments, the reference data flow includes a first type of reference data flow, where the first type of reference data flow is determined based on a protocol agreement.

In some embodiments, the first type of reference data flow includes one of following:
a first (initial/foremost) data flow in the plurality of data flows; and
a previous data flow of the any data flow in the plurality of data flows.

In some embodiments, the reference data flow includes a second type of reference data flow; and
the first processing module is configured to determine the second type of reference data flow based on first indication information sent by the core network device.

An embodiment of the present disclosure provides a multi-flow synchronization threshold processing apparatus, including: a first processing module 51, configured to determine a second type of reference data flow based on first indication information sent by a core network device.

In some embodiments, the second type of reference data flow is any data flow in the plurality of data flows.

In some embodiments, the first notification information includes one of the following:
QoS establishment request information;
QoS modification request information; and
QoS deletion request information.

In some embodiments, the first notification information further includes at least one of the following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

An embodiment of the present disclosure provides a multi-flow synchronization threshold processing apparatus, including: a first sending module, configured to send a delay deviation measurement result to a core network device, where the delay deviation measurement result includes at least one of the following:
a first delay deviation measurement result: a measured delay deviation between at least two data flows; and
a second delay deviation measurement result: a result of whether the measured delay deviation between the at least two data flows meets the synchronization threshold.

An embodiment of the present disclosure provides a multi-flow synchronization threshold processing apparatus, including: a first sending module, configured to send second notification information to a core network device, where the second notification information includes a delay deviation measurement result.

In some embodiments, the second notification information includes: PDU session resource notification information.

An embodiment of the present disclosure provides a multi-flow synchronization threshold processing apparatus, including: a first receiving module, configured to receive auxiliary information sent by a UE, where the auxiliary information carries a delay deviation measurement result.

In some embodiments, the auxiliary information further includes: an expected synchronization threshold between two data flows expected by the UE.

An embodiment of the present disclosure provides a multi-flow synchronization threshold processing apparatus, including: a first processing module 51, configured to determine a synchronization threshold based on an expected synchronization threshold.

An embodiment of the present disclosure provides a multi-flow synchronization threshold processing apparatus, including: a first processing module 51, configured to determine a second delay deviation measurement result to be sent to a core network device based on a first delay deviation measurement result carried in received auxiliary information;
and/or, the first processing module 51 is configured to determine the second delay deviation measurement result to be sent to the core network device based on the second delay deviation measurement result carried in the received auxiliary information.

An embodiment of the present disclosure provides a multi-flow synchronization threshold processing apparatus, including: a first sending module, configured to send fourth indication information to a UE, where the fourth indication information is used to indicate at least two data flows for reporting a delay deviation measurement result.

An embodiment of the present disclosure provides a multi-flow synchronization threshold processing apparatus, including: a first processing module 51, configured to determine a configuration of scheduling information based on a synchronization threshold.

An embodiment of the present disclosure provides a multi-flow synchronization threshold processing apparatus, including: a first processing module 51, configured to determine starting positions of durations of a plurality of discontinuous DRX cycles based on a synchronization threshold, where one DRX cycle corresponds to one data flow.

As shown in FIG. 9, an embodiment of the present disclosure provides a multi-flow synchronization threshold processing apparatus, including:
a second sending module 61, configured to send first notification information to a base station, where the first notification information carries a synchronization threshold, and the synchronization threshold is used to indicate a delay deviation requirement for transmission of at least two data flows in a plurality of data flows.

The multi-flow synchronization threshold processing apparatus provided by the embodiment of the present disclosure includes a core network device.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the first notification information carries the synchronization threshold between any two data flows in the plurality of data flows; or, the first notification information carries the synchronization threshold uniformly configured for the plurality of data flows; or, the first notification information carries the synchronization threshold between any data flow in the plurality of data flows and a reference data flow.

In some embodiments, the reference data flow includes: a first type of reference data flow, where the first type of reference data flow is determined based on a protocol agreement.

In some embodiments, the first type of reference data flow includes one of following:
a first data flow in the plurality of data flows; and
a previous data flow of the any data flow in the plurality of data flows.

In some embodiments, the reference data flow includes a second type of reference data flow.

An embodiment of the present disclosure provides a multi-flow synchronization threshold processing apparatus, including: a second sending module 61, configured to send first indication information to a base station, where the first indication information indicates a second type of reference data flow.

In some embodiments, the second type of reference data flow is any data flow in the plurality of data flows.

In some embodiments, the first notification information includes one of the following:
QoS establishment request information;
QoS modification request information; and
QoS deletion request information.

In some embodiments, the first notification information further includes at least one of the following:
second indication information, configured to trigger reporting of a delay deviation measurement result, where the delay deviation measurement result indicates whether a measured delay deviation between data flows meets a requirement of the synchronization threshold or a measured delay deviation between measured data flows; and
third indication information, configured to indicate a reporting type for the delay deviation measurement result to be reported, where the reporting type includes: a periodic reporting type or a trigger event reporting type.

An embodiment of the present disclosure provides a multi-flow synchronization threshold processing apparatus, including: a second receiving module, configured to receive a threshold value measurement result sent by a base station, where the delay deviation measurement result includes at least one of the following:
a first delay deviation measurement result: a measured delay deviation between at least two data flows; and
a second delay deviation measurement result: a result of whether the measured delay deviation between the at least two data flows meets the synchronization threshold.

An embodiment of the present disclosure provides a multi-flow synchronization threshold processing apparatus, including: a second receiving module, configured to receive second notification information sent by a base station, where the second notification information includes a threshold value measurement result.

In some embodiments, the second notification information includes PDU session resource notification information.

As shown in FIG. 10, an embodiment of the present disclosure provides a multi-flow synchronization threshold processing apparatus, including:
a third sending module 71, configured to send auxiliary information to a base station, where the auxiliary information includes an expected synchronization threshold, the expected synchronization threshold is used by the base station to determine a synchronization threshold, and the synchronization threshold is used to indicate a delay deviation requirement for transmission of at least two data flows in the plurality of data flows.

The multi-flow synchronization threshold processing apparatus provided by the embodiment of the present disclosure includes a UE.

In some embodiments, the synchronization threshold is used to indicate a first delay deviation requirement for transmission time of a first data flow later than transmission time of a second data flow, or a second delay deviation requirement for indicating the transmission time of the second data flow later than the transmission time of the first data flow.

In some embodiments, the auxiliary information further includes: a delay deviation measurement result, where the delay deviation measurement result includes at least one of following:
a first delay deviation measurement result: a measured delay deviation between at least two data flows; and
a second delay deviation measurement result: a result of whether the measured delay deviation between the at least two data flows meets the synchronization threshold.

An embodiment of the present disclosure provides a multi-flow synchronization threshold processing apparatus, including:
a third receiving module, configured to receive fourth indication information sent by a base station; and
a third processing module, configured to determine a delay deviation measurement result between at least two data flows to be reported as indicated by the fourth indication information.

It should be noted that those skilled in the art can understand that the method provided in the embodiment of the present disclosure may be performed individually or together with some methods in the embodiments of the present disclosure or some methods in the related art.

Regarding the apparatuses in the above embodiments, the specific manner in which each module performs operations has been described in detail in the embodiments regarding the methods, and will not be described in detail herein.

An embodiment of the present disclosure provides a communication device, including:
a processor;
a memory for storing executable instructions of the processor;
where the processor is configured to implement the multi-flow synchronization threshold processing method according to any embodiment of the present disclosure when running the executable instructions.

In an embodiment, the communication device may include but is not limited to at least one of: a base station or a UE or a core network device. The processor may include various types of storage mediums, which are non-transitory computer storage mediums capable of continuing to memorize and store information stored thereon after the user device is powered down.

The processor may be connected to the memory via a bus or the like for reading an executable program stored in the memory, for example, at least one of the methods shown in FIG. 2 to FIG. 7.

An embodiment of the present disclosure further provides a computer storage medium, which stores a computer executable program, and the executable program implements the multi-flow synchronization threshold processing method according to any embodiment of the present disclosure when being executed by a processor, for example, at least one of the methods shown in FIG. 2 to FIG. 7.

Regarding the apparatus or storage medium in the above embodiments, the specific manner in which each module performs operations has been described in detail in the embodiments regarding the methods, and will not be described in detail herein.

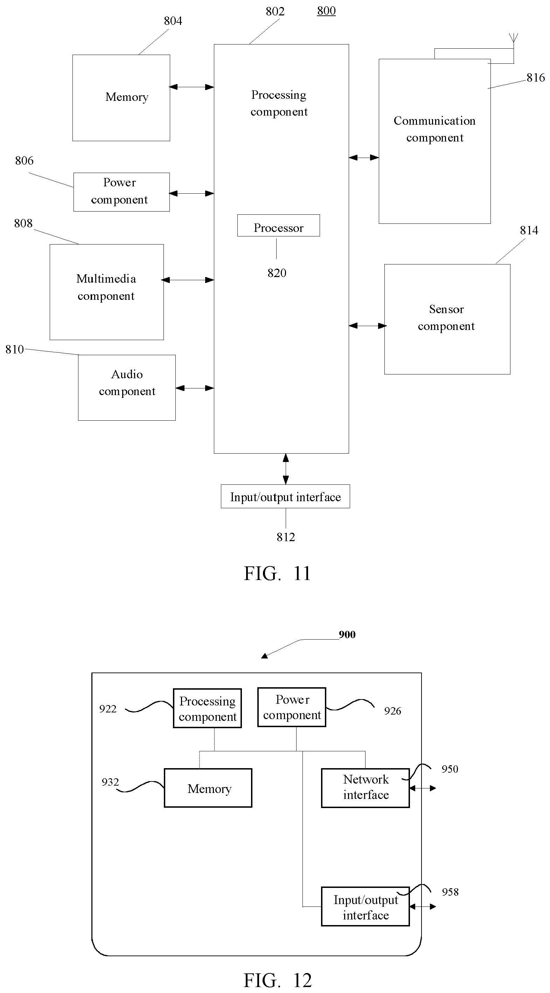

FIG. 11 is a block diagram of a user equipment 800 provided by an embodiment of the present disclosure. For example, the user equipment 800 may be a mobile phone, a computer, a digital broadcast terminal device, a messaging device, a gaming console, a tablet, a medical device, an exercise equipment, a personal digital assistant, and the like.

Referring to FIG. 11, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operation of the user equipment 800, such as the operations associated with display, telephone calls, data communications, camera operations, and recording operations. The processing component 802 may include one or more processors 820 to execute instructions to complete all or part of the steps of the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, videos, etc. The memory 804 may be implemented using any type of volatile or non-volatile memory devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 900.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the user equipment 900 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the equipment 800, relative positioning of components, e.g., the display and the keypad, of the user equipment 800, a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication, wired or wirelessly, between the user equipment 800 and other devices. The user equipment 800 can access a wireless network based on a communication standard, such as WiFi, 4G or 5G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the user equipment 800, for completing the above methods. For example, the non-transitory computer-readable storage medium may be a ROM, a random access memory (RAM), a CD-ROM, a magnetic tape, a floppy disc, an optical data storage device, and the like.

As shown in FIG. 12, an embodiment of the present disclosure illustrates a structure of a base station. For example, the base station 900 may be provided as a net-work side device. Referring to FIG. 12, the base station 900 includes a processing component 922, which further includes one or more processor, and a memory resource represented by a memory 932 for storing instructions, such as an application program, that may be executed by the processing component 922. The application program stored in the memory 932 may include one or more modules, each corresponding to a set of instructions. In addition, the processing component 922 is configured to execute instructions to perform any of the aforementioned methods applied to the base station.

The base station 900 may further include a power component 926 configured to perform power management of the base station 900, a wired or wireless network interface 950 configured to connect the base station 900 to the network, and an input/output (I/O) interface 958. The base station 900 may operate based on an operating system stored in the memory 932, such as a Windows Server^{™}, a Mac OS X^{™}, a Unix^{™}, a Linux^{™}, a Free BSD^{™} or the like

Those skilled in the art will readily appreciate other embodiments of the present disclosure after considering the specification and practicing the disclosure disclosed herein. The present disclosure is intended to cover any variations, uses or adaptations of the present disclosure that follow the general principles of the present disclosure and include common knowledge or customary techniques in the art that are not disclosed in the present disclosure. The specification and the embodiments are considered exemplary only, and the true scope and spirit of the present disclosure are indicated by the following claims.

It should be understood that the present disclosure is not limited to the exact structures that have been described above and shown in the accompanying drawings, and various modifications and changes may be made without departing from the scope thereof. The scope of the present disclosure is limited only by the appended claims.

## Claims

1. A multi-flow synchronization threshold processing method, wherein the method is performed by a base station and comprises:
determining a synchronization threshold, wherein the synchronization threshold is used to indicate a delay deviation requirement for transmission of at least two data flows in a plurality of data flows.

2. The method according to claim 1, wherein,
the delay deviation requirement for the transmission of the at least two data flows comprises a first delay deviation requirement for transmission time of a first data flow later than transmission time of a second data flow, or a second delay deviation requirement for indicating the transmission time of the second data flow later than the transmission time of the first data flow.

3. The method according to claim 1, wherein determining the synchronization threshold comprises:
receiving first notification information sent by a core network device, wherein the first notification information carries the synchronization threshold.

4. The method according to any one of claims 1 to 3, wherein:
first notification information carries the synchronization threshold between any two data flows in the plurality of data flows;
or,
the first notification information carries the synchronization threshold uniformly configured for the plurality of data flows;
or,
the first notification information carries the synchronization threshold between any data flow and a reference data flow in the plurality of data flows.

5. The method according to claim 4, wherein the reference data flow comprises a first type of reference data flow, and the first type of reference data flow is determined based on a protocol agreement.

6. The method according to claim 5, wherein the first type of reference data flow comprises one of following:
a first data flow in the plurality of data flows; and
a previous data flow of the any data flow in the plurality of data flows.

7. The method according to claim 5, wherein the reference data flow comprises a second type of reference data flow; and
the method comprises: determining the second type of reference data flow based on first indication information sent by a core network device.

8. The method according to claim 7, wherein the second type of reference data flow is any data flow in the plurality of data flows.

9. The method according to claim 3, wherein the first notification information further comprises at least one of following:
second indication information, configured to trigger reporting of a delay deviation measurement result, wherein the delay deviation measurement result indicates whether a measured delay deviation between data flows meets a requirement of the synchronization threshold or a measured delay deviation between measured data flows; and
third indication information, configured to indicate a reporting type for reporting the delay deviation measurement result, wherein the reporting type comprises: a periodic reporting type or a trigger event reporting type.

10. The method according to claim 1 or 9, wherein the method comprises:
sending a delay deviation measurement result to a core network device, wherein the delay deviation measurement result comprises at least one of following:
a first delay deviation measurement result: a measured delay deviation between at least two data flows; and
a second delay deviation measurement result: a result of whether the measured delay deviation between the at least two data flows meets the synchronization threshold.

11. The method according to claim 10, wherein the method comprises:
receiving auxiliary information sent by a user equipment (UE), wherein the auxiliary information carries the delay deviation measurement result.

12. The method according to claim 11, wherein the auxiliary information further comprises:
an expected synchronization threshold between two data flows expected by the UE.

13. The method according to claim 11, wherein the method comprises:
determining the second delay deviation measurement result to be sent to the core network device based on the first delay deviation measurement result carried in the received auxiliary information;
and/or,
determining the second delay deviation measurement result to be sent to the core network device based on the second delay deviation measurement result carried in the received auxiliary information.

14. The method according to claim 10, wherein the method comprises:
sending fourth indication information to a UE, wherein the fourth indication information is used to indicate at least two data flows for reporting the delay deviation measurement result.

15. A multi-flow synchronization threshold processing method, wherein the method is performed by a core network device and comprises:
sending first notification information to a base station, wherein the first notification information carries a synchronization threshold, and wherein the synchronization threshold is used to indicate a delay deviation requirement for transmission of at least two data flows in a plurality of data flows.

16. The method according to claim 15, wherein,
the delay deviation requirement for the transmission of the at least two data flows comprises a first delay deviation requirement for transmission time of a first data flow later than transmission time of a second data flow, or a second delay deviation requirement for indicating the transmission time of the second data flow later than the transmission time of the first data flow.

17. The method according to claim 15 or 16, wherein,
the first notification information carries the synchronization threshold between any two data flows in the plurality of data flows;
or,
the first notification information carries the synchronization threshold uniformly configured for the plurality of data flows;
or,
the first notification information carries the synchronization threshold between any data flow and a reference data flow in the plurality of data flows.

18. The method according to claim 17, wherein the reference data flow comprises a first type of reference data flow, and the first type of reference data flow is determined based on a protocol agreement.

19. The method according to claim 18, wherein the first type of reference data flow comprises one of following:
a first data flow in the plurality of data flows; and
a previous data flow of the any data flow in the plurality of data flows.

20. The method according to claim 17, wherein the reference data flow comprises a second type of reference data flow; and
the method comprises: sending first indication information to the base station, wherein the first indication information indicates the second type of reference data flow.

21. The method according to claim 20, wherein the second type of reference data flow is any data flow in the plurality of data flows.

22. The method according to claim 15, wherein the first notification information further comprises at least one of following:
second indication information, configured to trigger reporting of a delay deviation measurement result, wherein the delay deviation measurement result indicates that a measured delay deviation between data flows meets the synchronization threshold; and
third indication information, configured to indicate a reporting type for reporting the delay deviation measurement result, wherein the reporting type comprises: a periodic reporting type or a trigger event reporting type.

23. The method according to claim 15 or 22, wherein the method comprises:
receiving a threshold value measurement result sent by the base station, wherein the delay deviation measurement result comprises at least one of following:
a first delay deviation measurement result: a measured delay deviation between at least two data flows; and
a second delay deviation measurement result: a result of whether the measured delay deviation between the at least two data flows meets the synchronization threshold.

24. A multi-flow synchronization threshold processing method, wherein the method is performed by a user equipment (UE) and comprises:
sending auxiliary information to a base station, wherein the auxiliary information comprises an expected synchronization threshold, the expected synchronization threshold is used by the base station to determine a synchronization threshold, and the synchronization threshold is used to indicate a delay deviation requirement for transmission of at least two data flows in the plurality of data flows.

25. The method according to claim 24, wherein,
the synchronization threshold is used to indicate a first delay deviation requirement for transmission time of a first data flow later than transmission time of a second data flow, or a second delay deviation requirement for indicating the transmission time of the second data flow later than the transmission time of the first data flow.

26. The method according to claim 24, wherein the auxiliary information further comprises: a delay deviation measurement result, and the delay deviation measurement result comprises at least one of following:
a first delay deviation measurement result: a measured delay deviation between at least two data flows; and
a second delay deviation measurement result: a result of whether the measured delay deviation between the at least two data flows meets the synchronization threshold.

27. The method according to claim 26, wherein the method comprises:
receiving fourth indication information sent by the base station; and
determining the delay deviation measurement result between at least two data flows to be reported as indicated by the fourth indication information.

28. A multi-flow synchronization threshold processing apparatus, comprising:
a first processing module, configured to determine a synchronization threshold, wherein the synchronization threshold is used to indicate a delay deviation requirement for transmission of at least two data flows in a plurality of data flows.

29. A multi-flow synchronization threshold processing apparatus, comprising:
a second sending module, configured to send first notification information to a base station, wherein the first notification information carries a synchronization threshold, and wherein the synchronization threshold is used to indicate a delay deviation requirement for transmission of at least two data flows in a plurality of data flows.

30. A multi-flow synchronization threshold processing apparatus, comprising:
a second sending module, configured to send auxiliary information to a base station, wherein the auxiliary information comprises an expected synchronization threshold, wherein the expected synchronization threshold is used by the base station to determine a synchronization threshold, and the synchronization threshold is used to indicate a delay deviation requirement for transmission of at least two data flows in the plurality of data flows.

31. A communication device, wherein the communication device comprises:
a processor; and
a memory for storing executable instructions of the processor;
wherein the processor is configured to implement the multi-flow synchronization threshold processing method according to any one of claims 1 to 14, or claims 15 to 23, or claims 24 to 27 when running the executable instructions.

32. A computer storage medium, wherein the computer storage medium stores a computer executable program, and the executable program implements the multi-flow synchronization threshold processing method according to any one of claims 1 to 14, or claims 15 to 23, or claims 24 to 27 when being executed by a processor.
